# EUROPÄISCHE PATENTSCHRIFT

(11) **EP 3 821 310 B1**
(45) Veröffentlichungstag und Bekanntmachung des Hinweises auf die Patenterteilung: **22.06.2022**
(21) Anmeldenummer: 19731224.2
(22) Anmeldetag: 13.06.2019
(51) Int. Cl.: G05B 23/02

(54) **VERFAHREN ZUM KOMPENSIEREN EINER FEHLFUNKTION EINES FELDGERÄTS IN EINER ANLAGE DER AUTOMATISIERUNGSTECHNIK**
METHOD FOR COMPENSATING FOR AN ERROR FUNCTION OF A FIELD DEVICE IN AN AUTOMATION TECHNOLOGY SYSTEM
PROCÉDÉ POUR COMPENSER UN DYSFONCTIONNEMENT D'UN APPAREIL DE TERRAIN DANS UN SYSTÈME UTILISÉ EN TECHNIQUE D'AUTOMATISATION

(30) Priorität: 12.07.2018 DE 102018116893
(43) Veröffentlichungstag der Anmeldung: 19.05.2021
(73) Patentinhaber: Endress+Hauser SE+Co. KG, 79689 Maulburg (DE)
(72) Erfinder: BIRGEL, Eric, 79650 Schopfheim (DE); KILIAN, Markus, 79249 Merzhausen (DE); SCHMIDT, Ralf, 68680 Kembs (FR); BUCHNER, Reinhard, 87484 Nesselwang (DE)
(74) Vertreter: Andres, Angelika Maria
(86) Internationale Anmeldenummer: PCT/EP2019/065443
(87) Internationale Veröffentlichungsnummer: WO 2020/011478

(56) Entgegenhaltungen:
- WO-A1-01/48571
- DE-A1- 10 135 586
- DE-A1- 10 243 619
- DE-A1-102012 112 601

## Beschreibung

Die Erfindung betrifft ein Verfahren zum Kompensieren einer Fehlfunktion eines Feldgeräts in einer Anlage der Automatisierungstechnik, wobei in der Anlage eine Vielzahl von Feldgeräten vorgesehen ist, wobei jedes der Feldgeräte zumindest eine Sensoreinheit aufweist, welche zum Erheben von zumindest einer Prozessgröße ausgestaltet ist, wobei die Feldgeräte in einem ersten Kommunikationsnetzwerk eingebunden sind und mit einer übergeordneten Einheit, sowie untereinander kommunizieren, und wobei die Feldgeräte die erhobenen Prozesswerte, Diagnosedaten und Statusinformationen über das Kommunikationsnetzwerk an die übergeordnete Einheit übermitteln.

Aus dem Stand der Technik sind bereits Feldgeräte bekannt geworden, die in industriellen Anlagen der Automatisierungstechnik zum Einsatz kommen. In der Prozessautomatisierung ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Sensoreinheiten. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktorsysteme verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Bei den übergeordneten Einheiten handelt es sich um Steuereinheiten, wie beispielsweise eine SPS (speicherprogrammierbare Steuerung). Die übergeordneten Einheiten dienen unter anderem zur Prozesssteuerung, sowie zur Inbetriebnahme der Feldgeräte. Die von den Feldgeräten, insbesondere von den Sensoreinheiten, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Im Zuge der fortschreitenden Digitalisierung hinsichtlich der Schlagworte "Internet of Things (loT)" und "Industrie 4.0", welche auch vor Komponenten von Prozessanlagen nicht Halt macht, besteht ein erhöhter Bedarf, Daten von Feldgeräten, insbesondere Messdaten, Diagnosedaten, Parameterwerte, etc. an zentraler Stelle verfügbar zu machen und aus diesen Daten einen Mehrwert zu schaffen (Schlagworte hierfür sind "Big Data Analysis", "Predictive Maintenance", etc.). Unter der zentralen Stelle wird häufig eine über das Internet kontaktierbare Datenbank, insbesondere eine sogenannte Cloud-fähige Datenbank, verstanden.

Heutzutage werden Sensorsysteme aber hauptsächlich noch über obig aufgeführte industrielle Feldbusnetzwerke von einer übergeordneten Einheit aus angesteuert und deren Daten an die übergeordnete Einheit übermittelt. Die Intelligenz ist hierbei zentralisiert auf Seiten der übergeordneten Einheit verortet. Aufgrund des derzeitigen Wandels durch die fortschreitende Digitalisierung wird die Intelligenz zunehmend dezentral auf die einzelnen Feldgeräte verlagert. Die einzelnen Sensorsysteme werden sich in Zukunft zunehmend auf eigene Initiative hin Informationen beschaffen können.

Der Ausfall eines Feldgeräts bedeutet mitunter einen hohen Kosten- und Zeitaufwand. Insbesondere in kritischen Prozessen muss - bis das Feldgerät repariert oder ausgetauscht worden ist - der betreffende Anlagenteil heruntergefahren werden. Als Alternative dazu werden oftmals im Vorfeld Redundanzen in den betreffenden Anlagenteil eingebaut. Hierbei handelt es sich in der Regel um zu den eingesetzten Feldgeräten identische Feldgeräte, welche im Fehlerfall ein betreffendes Feldgerät ersetzen.

Die DE 101 35 586 A1 offenbart ein Rekonfigurations-Verfahren zur Kompensation von Ausfällen in einem Sensorsystem. Für das Sensorsystem werden Ausfallzustände aus Abweichungen ermittelt, welche sich aus einem Vergleich einer Anzahl von zumindest einem Sensor des Systems gemessenen Zuständen mit einem von einem Systemmodell geschätzten Zustand ergeben.

In der DE 102 43 619 A ist ein Verfahren zum Datenaustausch zwischen Feldgeräten der Automatisierungstechnik beschrieben, bei welchem zusätzlich zum Datenaustausch über einen Feldbus ein Datenaustausch per Funk erfolgt.

In der DE 10 2012 112 601 A1 wird ein Verfahren zur Auswahl eines Feldgerätes zur Ermittlung zumindest eines Prozessparameters eines Messstoffs in der Prozess- und Automationstechnik, insbesondere des Durchflusses, des Füllstandes, des Grenzstandes, des Druckes, der Temperatur, der Leitfähigkeit und/oder lonenkonzentration eines Messstoffs offenbart, welches Feldgerät vorgesehen ist an einer Messstelle einer Anlage den zumindest einen Prozessparameter zu ermitteln.

Ausgehend von dieser Problematik liegt der Erfindung die Aufgabe zugrunde, ein Verfahren vorzustellen, welches es erlaubt, die Instandhaltung einer Anlage der Automatisierungstechnik zu erleichtern.

Die Aufgabe wird durch ein Verfahren zum Kompensieren einer Fehlfunktion eines Feldgeräts in einer Anlage der Automatisierungstechnik gelöst, wobei in der Anlage eine Vielzahl von Feldgeräten vorgesehen ist, wobei jedes der Feldgeräte zumindest eine Sensoreinheit aufweist, welche zum Erheben von zumindest einer Prozessgröße ausgestaltet ist, wobei die Feldgeräte in einem ersten Kommunikationsnetzwerk eingebunden sind und mit einer übergeordneten Einheit, sowie untereinander kommunizieren, und wobei die Feldgeräte die erhobenen Prozesswerte,

Diagnosedaten und Statusinformationen über das Kommunikationsnetzwerk an die übergeordnete Einheit übermitteln, umfassend:
- Übermitteln von Eigenschaften der Sensoreinheit eines Feldgeräts an jedes der weiteren Feldgeräte, wobei die Eigenschaften Informationen darüber enthalten, welcher Typ von Prozessgrößen von der Sensoreinheit erhoben werden kann;
- Übermitteln der Gerätestatus der Feldgeräte und/oder der Sensoreinheiten an jedes der weiteren Feldgeräte, insbesondere ständig oder zu festgelegten Zeitpunkten;
- Etablieren eines Ersetzungssystems, wobei jedem der Feldgeräte die Eigenschaften von jeder der Sensoreinheiten und der Gerätestatus von jedem der Feldgeräte und/oder von jeder der Sensoreinheiten bekannt sind, und wobei die Feldgeräte im Zuge des Etablierens des Ersetzungssystems selbstständig ermitteln, welche Prozessgröße einer Sensoreinheit eine Prozessgröße einer weiteren Sensoreinheit mit einer vorbestimmten Genauigkeit als Ersatzgröße ersetzen kann; und
- Übermitteln der Ersatzgröße an die übergeordnete Einheit im Falle des Auftretens zumindest eines vorbestimmten Gerätestatus eines Feldgeräts, bzw. einer Sensoreinheit.

Der große Vorteil des erfindungsgemäßen Verfahrens besteht darin, dass Ausfälle eines Feldgeräts, bzw. dessen Sensoreinheit auf einfache Art und Weise aufgefangen werden können. Anstatt ein redundantes Ersatzgerät vorzuhalten wird von den Feldgeräten selbstständig eine Ersatzgröße bestimmt. Die Ersatzgröße wird solange an die übergeordnete Einheit übermittelt, bis ein Benutzer die Übermittlung beendet. Das ausgefallene Feldgerät kann in der Zwischenzeit repariert oder ausgetauscht werden, ohne dass der betroffene Anlagenteil heruntergefahren und der Prozess unterbrochen werden muss.

Die gewünschte Genauigkeit der Ersatzgröße im Vergleich zu der ausgefallenen Prozessgröße kann vom Benutzer im Vorfeld festgelegt werden. Dadurch werden Feldgeräte, bzw. Sensorsysteme, deren erfasste Prozessgrößen zu sehr von dem ausgefallenen Feldgerät abweichen, nicht berücksichtigt.

Auf diese Art und Weise kann beispielsweise ein Temperatursensor einen ausgefallenen Temperatursensor ersetzen. Die Feldgeräte haben Kenntnis von der Art der erfassten Prozesswerte aller Feldgeräte, bzw. deren Sensoreinheiten, und deren typischen Größen.

Beispiele für Gerätestatus, welche das Übermitteln der Ersatzgröße auslösen, sind beispielsweise "Wartung erforderlich" und/oder "Gerät offline".

Beispiele für Feldgeräte und deren Sensoreinheiten, die im Zusammenhang mit dem erfindungsgemäßen Verfahren genannt werden, sind bereits im einleitenden Teil der Beschreibung beispielhaft beschrieben worden.

Gemäß einer vorteilhaften Weiterbildung des erfindungsgemäßen Verfahrens ist vorgesehen, dass im Zuge des Etablierens des Ersetzungssystems weitere Eigenschaften eines Feldgeräts, bzw. eines Sensorsystems des Feldgeräts, an die Vielzahl der Feldgeräte übermittelt und verglichen werden. Die Genauigkeit der Ersatzgröße wird dadurch erhöht, da nicht nur die reinen Prozessmesswerte der eigentlichen Prozessgröße mit potentiellen Prozessgrößen verglichen werden, sondern weitere Metadaten miteinbezogen werden.

In einer bevorzugten Ausgestaltung des erfindungsgemäßen Verfahrens ist vorgesehen, dass die weiteren Eigenschaften Informationen bezüglich der geografischen Lage des Feldgeräts beinhalten.

In einer vorteilhaften Ausgestaltung des erfindungsgemäßen Verfahrens ist vorgesehen, dass die weiteren Eigenschaften Informationen bezüglich der Messstelle, in welche das Feldgerät eingebaut ist, und/oder der Funktion des Feldgeräts in der Messstelle beinhalten.

Gemäß einer bevorzugten Ausgestaltung des erfindungsgemäßen Verfahrens ist vorgesehen, dass die Ersatzgröße nur dann an die übergeordnete Einheit übermittelt wird, wenn die Ersatzgröße von einer vorbestimmten Anzahl von Feldgeräten bestätigt wird. Durch ein solches Mehrheitssystem wird die Zuverlässigkeit verbessert und eine eventuelle Falschberechnung von einem der Feldgeräte kompensiert.

Gemäß einer vorteilhaften Weiterbildung des erfindungsgemäßen Verfahrens ist vorgesehen, dass die Historie der Ersatzgröße mit Historiendaten der ermittelten Prozessgröße des Feldgeräts, an welchem der zumindest eine vorbestimmte Gerätestatus eingetreten ist, verglichen wird und nur dann bestätigt wird, wenn die Werte der Ersatzgröße hinsichtlich den Historiendaten plausibel ist. Beispielsweise wird der Verlauf der Prozessgrößen über die Zeit verglichen. Zeigt die Ersatzgröße einen anderen Verlauf als die ursprüngliche Prozessgröße (Bspw. ursprüngliche Prozessgröße: über die Zeit ansteigende Höhe der Prozesswerte; Ersatzgröße: über die Zeit fallende Höhe der Prozesswerte), so ist die Ersatzgröße nicht plausibel und daher nicht geeignet, das ausgefallene Feldgeräte, bzw. dessen Sensoreinheit, adäquat zu ersetzen.

In einer vorteilhaften Ausgestaltung des erfindungsgemäßen Verfahrens ist vorgesehen, dass die Feldgeräte im Zuge des Etablierens des Ersetzungssystems ermitteln, ob Sensoreinheiten zueinander redundante Prozessgrößen erheben. Redundant bedeutet in diesem Zusammenhang, dass die Prozessgrößen nahezu übereinstimmend sind. Weiterhin handelt es sich um denselben Gerätetyp, sowie um dieselbe Funktion eines Feldgeräts, bzw. dessen Sensoreinheit. Auch befindet sich dieses in derselben Messstelle.

Gemäß einer vorteilhaften Weiterbildung des erfindungsgemäßen Verfahrens ist vorgesehen, dass bei einem vorbestimmten Gerätestatus von einem der Feldgeräte, bzw. vom einem der Sensorsysteme, welches eine redundante Prozessgröße erhebt, keine Ersatzgröße an die übergeordnete Einheit übermittelt wird. Da eine redundante Prozessgröße vorhanden ist, muss keine Ersatzgröße bereitgestellt werden, da diese redundante Prozessgröße die ausgefallene Prozessgröße bereits ersetzt.

Gemäß einer vorteilhaften Ausgestaltung des erfindungsgemäßen Verfahrens ist vorgesehen, dass als erstes Kommunikationsnetzwerk ein drahtgebundenes, insbesondere ein Ethernet-basiertes, Kommunikationsnetzwerk verwendet wird. Es kann sich hierbei auch um einen Feldbus der Automatisierungstechnik handeln, beispielsweise basierend auf einem der Protokolle HART, Profibus PA/DP, Foundation Fieldbus, etc. Es kann auch vorgesehen sein, dass das erste Kommunikationsnetzwerk aus mehreren Teilsegmenten besteht, welche unter Umständen auf unterschiedlichen Protokollen basieren.

Gemäß einer alternativen vorteilhaften Ausgestaltung des erfindungsgemäßen Verfahrens ist vorgesehen, dass als erstes Kommunikationsnetzwerk ein drahtloses Kommunikationsnetzwerk verwendet wird. Insbesondere basiert dieses auf dem
WLAN-, bzw. WiFi-Standard. Alternativ kann jeder weitere gebräuchliche Drahtlosstandard verwendet werden.

In einer ersten Variante des erfindungsgemäßen Verfahrens ist vorgesehen, dass die Feldgeräte untereinander und mit der übergeordneten Einheit über das erste Kommunikationsnetzwerk kommunizieren.

In einer zweiten Variante des erfindungsgemäßen Verfahrens ist vorgesehen, dass die Feldgeräte mit der übergeordneten Einheit über das erste Kommunikationsnetzwerk kommunizieren und dass die Feldgeräte untereinander über ein zweites Kommunikationsnetzwerk, insbesondere über ein drahtloses Kommunikationsnetzwerk, kommunizieren. Auf diese Art und Weise wird zusätzlicher Datenverkehr auf dem ersten Kommunikationsnetzwerk verhindert und dessen Performance nicht eingeschränkt.

Die Erfindung wird anhand der nachfolgenden Figuren näher erläutert. Es zeigen
Fig. 1: ein erstes Ausführungsbeispiel des erfindungsgemäßen Verfahrens;
Fig. 2: ein zweites Ausführungsbeispiel des erfindungsgemäßen Verfahrens; und
Fig. 3: ein drittes Ausführungsbeispiel des erfindungsgemäßen Verfahrens.

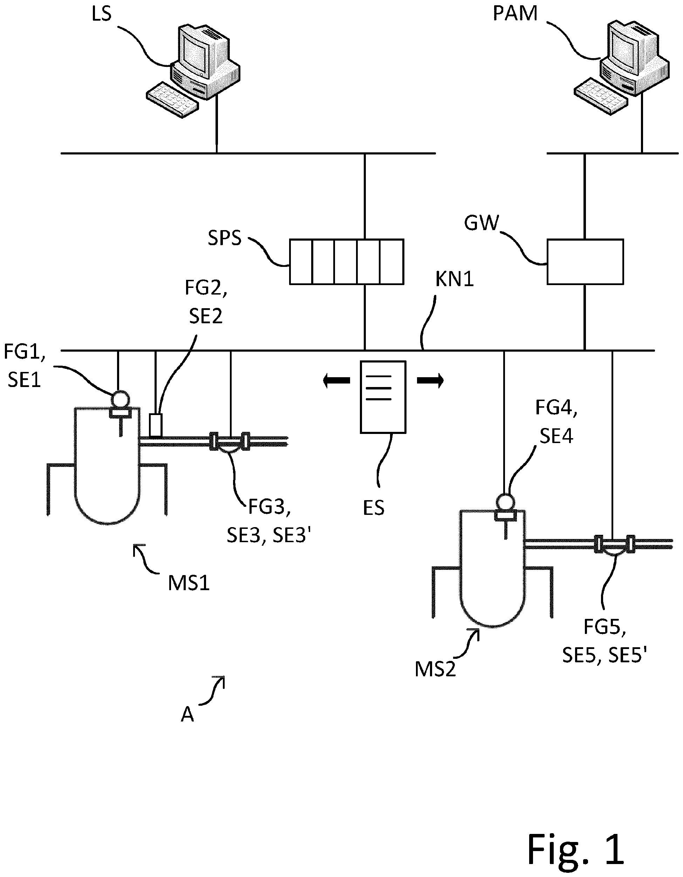

In Fig. 1 sind Teile einer Anlage A der Automatisierungstechnik abgebildet. Konkret handelt es sich um zwei Messstellen MS1, MS2. Diese bestehen jeweils aus einem Tank und einer von dem Tank abführenden Rohrleitung. Zur Messung des Füllstands des Tanks als Prozessgröße ist jeweils ein Feldgerät FG1, FG4, beispielsweise ein Füllstandsmessgerät mittels eines Radars als Sensoreinheit SE1, SE4, am Tank angebracht. Zur Messung der Durchflussgeschwindigkeit in der Rohrleitung ist jeweils ein Feldgerät FG3, FG5 angebracht, dessen Sensoreinheit SE3, SE5 die Durchflussgeschwindigkeit eines die Rohrleitung durchströmenden Mediums als primäre Prozessgröße nach dem Coriolisprinzip bestimmt. Jedes der Feldgeräte FG3, FG5 verfügt des Weiteren über einen Temperatursensor SE3', SE5' als weitere Sensoreinheit, welche die Temperatur des die Rohrleitung durchströmenden Mediums als sekundäre Prozessgröße erfasst. Des Weiteren ist in der Messstelle MS1 ein weiteres Feldgerät FG2 angebracht, welches die Temperatur des die Rohrleitung durchströmenden Messmediums mittels eines hochpräzisen Temperatursensors SE2 als Sensoreinheit bestimmt.

Die Feldgeräte F1, ..., F5 sind untereinander mittels eines ersten Kommunikationsnetzwerks KN1 verbunden und stehen miteinander in Kommunikationsverbindung. Bei dem ersten Kommunikationsnetzwerk KN1 handelt es sich insbesondere um ein Ethernet-Netzwerk. Alternativ handelt es sich bei dem ersten Kommunikationsnetzwerk KN1 um einen Feldbus nach einem der bekannten Feldbusstandards, beispielsweise Profibus, Foundation Fieldbus oder HART.

Das erste Kommunikationsnetzwerk KN1 beinhaltet eine übergeordnete Einheit SPS, beispielsweise eine speicherprogrammierbare Steuerung, welche Befehle an die Feldgeräte FG1, ..., FG5 übermittelt, woraufhin die Feldgeräte FG1, ..., FG5 Prozesswerte, Diagnosedaten und Statusinformationen an die übergeordnete Einheit SPS übermitteln. Diese Prozesswerte, Diagnosedaten und Statusinformationen werden von der übergeordneten Einheit SPS an einen Workstation-PC in der Leitstelle LS der Anlage A weitergeleitet. Dieser dient unter anderem zur Prozessvisualisierung, Prozessüberwachung und zum Engineering wie zum Bedienen und Überwachen der Feldgeräten FG1, ..., FG5.

Des Weiteren beinhaltet das erste Kommunikationsnetzwerk KN1 ein Gateway GW, welches die von den Feldgeräten FG1, ..., FG5 an die übergeordnete Einheit SPS übermittelten Prozesswerte, Diagnosedaten und Statusinformationen mithört und einem externen Kommunikationsnetzwerk, beispielsweise einem IT-Netzwerk des Anlagenbetreibers oder dem Internet, zur Verfügung stellt. Die Daten werden beispielsweise an ein Plant Asset Management-System PAM übermittelt, welches sich in dem IT-Netzwerk befindet oder als cloudfähige Applikation auf einem Server per Internet erreichbar ist. Ein solches Plant AssetManagement-System PAM dient dem Verwalten der Assets, also dem Inventarbestand, der Anlage A.

Im Folgenden sei eine Anwendung des erfindungsgemäßen Verfahrens beschrieben:
Um auf einen Ausfall eines Feldgeräts FG1, ..., FG5, bzw. einer Sensoreinheit SE1, ..., SE5' von einem der Feldgeräte FG1, ..., FG5 reagieren zu können, ohne dass der Prozess der Anlage A, bzw. der Messstellen MS1, MS2, unterbrochen werden muss, erstellen die Feldgeräte FG1, ..., FG5 selbstständig ein Ersetzungssystem ES. Dieses beinhaltet alle Sensoreinheiten SE1, ..., SE5' der Feldgeräte FG1, ..., FG5, deren erhobenen Prozessgrößen und für jede der Sensoreinheiten SE1, ..., SE5' jeweils eine Liste derjenigen Sensoreinheiten SE1, ..., SE5', welche eine der Sensoreinheiten SE1, ..., SE5' bei einem Ausfall als Ersatzgröße ersetzen kann. Des Weiteren wird für jede der Ersatzgrößen eine Genauigkeit berechnet, mit welcher eine Ersatzgröße mit der zu ersetzenden Prozessgröße übereinstimmt.

Zum Erstellen des Ersetzungssystems ES kommunizieren die Feldgeräte FG1, ..., FG5 miteinander über das erste Kommunikationsnetzwerk KN1. Hierbei tauschen die Feldgeräte FG1, ..., FG5 Informationen über den Typ der von deren Sensoreinheiten SE1, ..., SE5' erfassbaren Prozessgrößen, Informationen über die geographische Lage der Feldgeräte FG1, ..., FG5, Informationen über die Messstellen MS1, MS2, in welche die Feldgeräte FG1, ..., FG5 eingebaut sind, Informationen über die Funktion der Feldgeräte FG1, ..., FG5 in den Messstellen MS1, MS2, die von den Sensoreinheiten SE1, ..., SE5' erhobene Prozessgrößen und Historiendaten der von den Sensoreinheiten SE1, ..., SE5' erhobenen Prozessgrößen, etc. aus aus. Des Weiteren übertragen die Feldgeräte FG1, ..., FG5 ihren aktuellen Gerätestatus, bzw. den Gerätestatus ihrer Sensoreinheiten SE1, ..., SE5'.

Im in Fig. 1 gezeigten Beispiel fällt der Temperatursensor SE2 des Feldgeräts FG2 einige Zeit nach Erstellen des Ersetzungssystems ES aus. Das Feldgerät wechselt in den Gerätestatus "Wartung erforderlich" und erfasst keine neuen Temperaturwerte mehr. Der neue Gerätestatus wird von den übrigen Feldgeräten FG1, FG3, FG4, FG5 empfangen. Jedes der Feldgeräte wendet anschließend das Ersetzungssystem an, bestimmt Ersatzgrößen für die ausgefallene Prozessgröße und vergleicht die Genauigkeit jeder der potentiellen Ersatzgrößen miteinander.

Im vorliegenden Beispiel werden zwei potentielle Ersatzgrößen bestimmt: der erhobene Temperaturwert des Temperatursensors SE3' des Feldgeräts FG3, sowie der erhobene Temperaturwert des Temperatursensors SE5' des Feldgeräts FG5. Anschließend werden die Genauigkeiten der beiden potentiellen Ersatzgrößen miteinander verglichen. Die potentielle Ersatzgröße des Feldgeräts FG5 liefert hier eine niedrige, ungenügende Genauigkeit. Das Feldgerät FG5 befindet sich in einer zur Messstelle MS1 verschiedenen Messstelle MS2, so dass auch die Historiendaten der Feldgeräte FG2 und FG5 sehr voneinander abweichen.

Die potentielle Ersatzgröße des Feldgeräts FG3 zeigt eine hohe Genauigkeit. Das Feldgerät FG3 befindet sich in derselben Messstelle MS1, in welcher sich das Feldgerät FG2 befindet. Bis auf einen leichten Offset gleichen sich die Historiendaten der Feldgeräte FG2 und FG3, so dass die Ersatzgröße ausreichend gut die Temperatur des Messmediums in der Rohrleitung angibt.

Daher wird die Ersatzgröße der Sensoreinheit SE 3' des Feldgeräts FG3 von jedem der Feldgeräte FG1, FG3, FG4, FG5 vorgeschlagen. Es kann vorgesehen sein, dass bei unterschiedlichen Vorschlägen eine einfache Mehrheit erforderlich sein muss, um eine Ersatzgröße zu bestimmen. Die bestimmte Ersatzgröße wird anschließend der übergeordneten Einheit SPS übermittelt. Diese leitet die aktuellen Werte der Ersatzgröße laufend an die Leitstelle LS der Anlage unter dem Vermerk "Ersatzgröße SE2" weiter, wo diese bis zur Wartung des Feldgeräts FG2 verwendet und ausgewertet werden können.

Der große Vorteil des erfindungsgemäßen Verfahrens besteht darin, dass der Prozess nicht heruntergefahren werden muss und problemlos fortgeführt werden kann. Je nach Kritikalität des Prozesses muss die erforderliche Genauigkeit der Ersatzgröße allerdings entsprechend hoch gesetzt werden, um ein gefahrloses Weiterbetreiben des Prozesses gewährleisten zu können. Die Ersatzgröße wird unter der Berechnung aller Feldgeräte FG1, FG3, FG4, FG5 ermittelt, was Fehler verringert (Schwarmintelligenz).

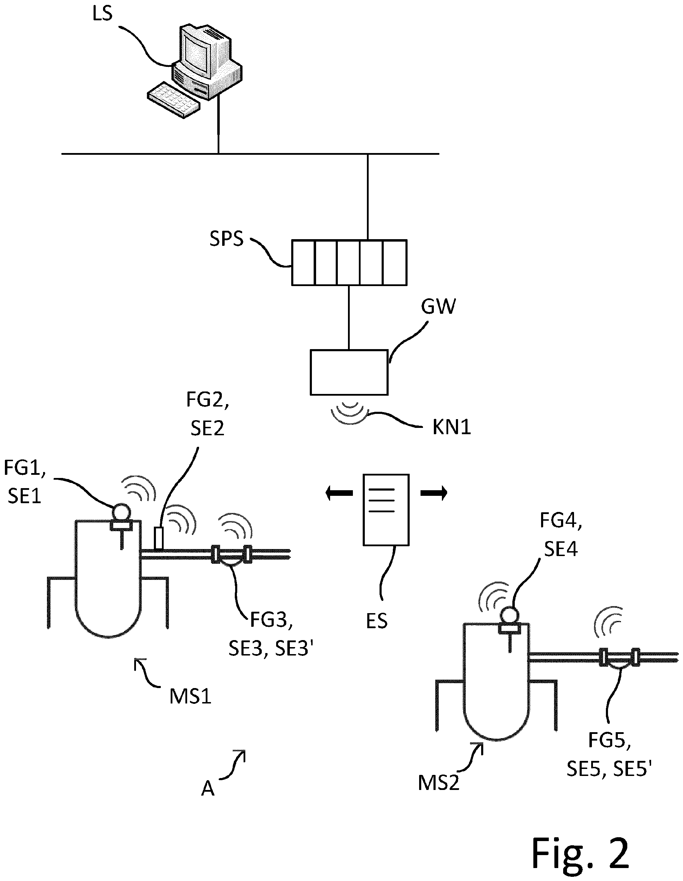

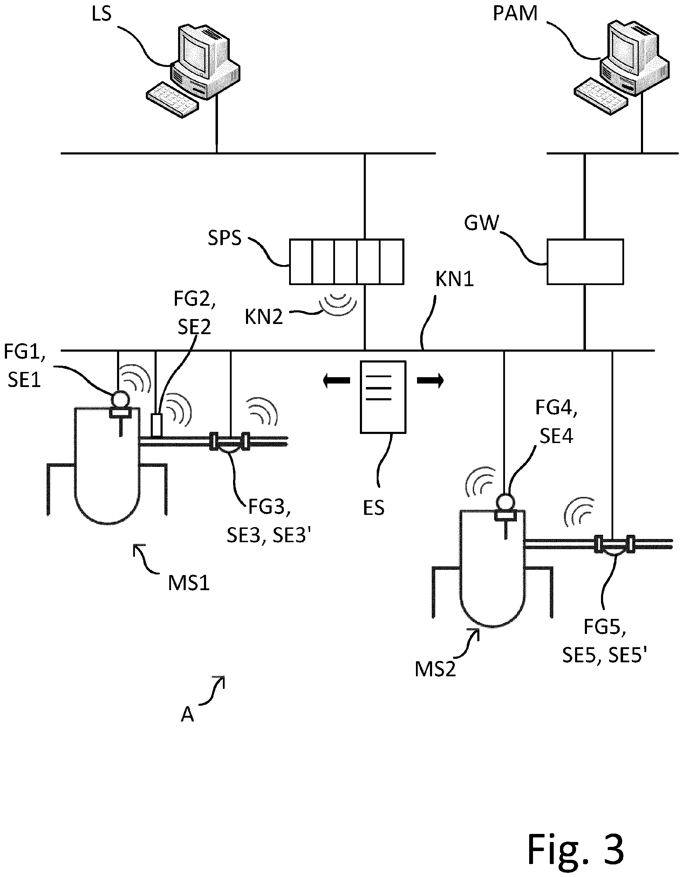

Fig. 2 und Fig. 3 zeigen weitere Ausführungsbeispiele. Der Verfahrensablauf ist hierbei identisch, jedoch ist die Netzwerkstruktur verändert.

In Fig. 2 ist das erste Kommunikationsnetzwerk KN1 drahtlos ausgestaltet. Hierbei wird das WiFi-Protokoll verwendet. Es ist jedoch auch jedes weitere geeignete drahtlose Protokoll einsetzbar, beispielsweise WirelessHART, etc. Das drahtlose Signal wird von einem Gateway GW empfangen, welches die Signale an die Steuerungseinheit weiterleitet. Die in Fig. 2 gezeigte Netzwerkarchitektur ist als beispielhaft zu verstehen. Jede weitere geeignete Netzwerkarchitektur kann eingesetzt werden. Beispielsweise kann vorgesehen sein, dass die Steuerungseinheit selbst ein Funkmodul aufweist.

Fig. 3 nutzt dieselbe Netzwerkarchitektur des ersten Kommunikationsnetzwerks wie in Fig. 1 gezeigt. Zusätzlich nutzen die Feldgeräte FG1, ..., FG5 und die übergeordnete Einheit SPS ein zweites, drahtloses Kommunikationsnetzwerk KN2. Die Feldgeräte FG1, ..., FG5 und die übergeordnete Einheit SPS sind dazu ausgestaltet, Prozesswerte, Diagnosedaten und Statusinformationen über das erste Kommunikationsnetzwerk KN1 auszutauschen. Alle Daten, die im Zuge des Etablierens des Ersetzungssystems ES und des Ermittelns der Ersatzgröße ausgetauscht werden müssen, werden über das drahtlose zweite Kommunikationsnetzwerk KN2 ausgetauscht. Auf diese Art und Weise wird zusätzlicher Datenverkehr auf dem ersten Kommunikationsnetzwerk KN1 verhindert und dessen Performance nicht eingeschränkt.

### Bezugszeichenliste

- A: Anlage der Automatisierungstechnik
- ES: Ersetzungssystem
- FG1, FG2, FG3, FG4, FG5: Feldgerät
- GW: übergeordnete Einheit, Gateway
- KN1: erstes Kommunikationsnetzwerk
- KN2: zweites Kommunikationsnetzwerk
- MS1, MS2: Messstelle
- PAM: Plant Asset Management System
- SE1, SE2, SE3, SE3', SE4, SE5, SE5': Sensoreinheit
- SPS: übergeordnete Einheit, Steuerungseinheit

## Patentansprüche

1. Verfahren zum Kompensieren einer Fehlfunktion eines Feldgeräts (FG1, FG2, FG3, FG4, FG5) in einer Anlage (A) der Automatisierungstechnik, wobei in der Anlage eine Vielzahl von Feldgeräten (FG1, ..., FG5) vorgesehen ist, wobei jedes der Feldgeräte (FG1, ..., FG5) zumindest eine Sensoreinheit (SE1, SE2, SE3, SE3', SE4, SE5, SE5') aufweist, welche zum Erheben von zumindest einer Prozessgröße ausgestaltet ist, wobei die Feldgeräte (FG1, ..., FG5) in einem ersten Kommunikationsnetzwerk (KN1) eingebunden sind und mit einer übergeordneten Einheit (GW, SPS), sowie untereinander kommunizieren, und wobei die Feldgeräte (FG1, ..., FG5) die erhobenen Prozesswerte, Diagnosedaten und Statusinformationen über das Kommunikationsnetzwerk (KN1) an die übergeordnete Einheit (GW, SPS) übermitteln, umfassend:
- Übermitteln von Eigenschaften der Sensoreinheit (SE1, ..., SE5') eines Feldgeräts (FG1, ..., FG5) an jedes der weiteren Feldgeräte (FG1, ..., FG5), wobei die Eigenschaften Informationen darüber enthalten, welcher Typ von Prozessgrößen von der Sensoreinheit (SE1, ..., SE5') erhoben werden kann;
- Übermitteln der Gerätestatus der Feldgeräte (FG1, ..., FG5) und/oder der Sensoreinheiten (SE1, ..., SE5') an jedes der weiteren Feldgeräte (FG1, ..., FG5), insbesondere ständig oder zu festgelegten Zeitpunkten;
- Etablieren eines Ersetzungssystems (ES), wobei jedem der Feldgeräte (FG1, ..., FG5) die Eigenschaften von jeder der Sensoreinheiten (SE1, ..., SE5') und der Gerätestatus von jedem der Feldgeräte (FG1, ..., FG5) und/oder von jeder der Sensoreinheiten (SE1, ..., SE5') bekannt sind, und wobei die Feldgeräte (FG1, ..., FG5) im Zuge des Etablierens des Ersetzungssystems (ES) selbstständig ermitteln, welche Prozessgröße einer Sensoreinheit (SE1, ..., SE5') eine Prozessgröße einer weiteren Sensoreinheit (SE1, ..., SE5') mit einer vorbestimmten Genauigkeit als Ersatzgröße ersetzen kann; und
- Übermitteln der Ersatzgröße an die übergeordnete Einheit (GW, SPS) im Falle des Auftretens zumindest eines vorbestimmten Gerätestatus eines Feldgeräts (FG1, ..., FG5), bzw. einer Sensoreinheit (SE1, ..., SE5').

2. Verfahren nach Anspruch 1, wobei im Zuge des Etablierens des Ersetzungssystems (ES) weitere Eigenschaften eines Feldgeräts (FG1, ..., FG5), bzw. eines Sensorsystems des Feldgeräts (FG1, ..., FG5), an die Vielzahl der Feldgeräte (FG1, ..., FG5) übermittelt und verglichen werden.

3. Verfahren nach Anspruch 2, wobei die weiteren Eigenschaften Informationen bezüglich der geografischen Lage des Feldgeräts (FG1, ..., FG5) beinhalten.

4. Verfahren nach Anspruch 2 oder 3, wobei die weiteren Eigenschaften Informationen bezüglich der Messstelle (MS1, MS2), in welche das Feldgerät (FG1, ..., FG5) eingebaut ist, und/oder der Funktion des Feldgeräts (FG1, ..., FG5) in der Messstelle (MS1, MS2) beinhalten.

5. Verfahren nach einem der vorherigen Ansprüche, wobei die Ersatzgröße nur dann an die übergeordnete Einheit (GW, SPS) übermittelt wird, wenn die Ersatzgröße von einer vorbestimmten Anzahl von Feldgeräten (FG1, ..., FG5) bestätigt wird.

6. Verfahren nach einem der vorherigen Ansprüche, wobei die Historie der Ersatzgröße mit Historiendaten der ermittelten Prozessgröße des Feldgeräts (FG1, ..., FG5), an welchem der zumindest eine vorbestimmte Gerätestatus eingetreten ist, verglichen wird und nur dann bestätigt wird, wenn die Werte der Ersatzgröße hinsichtlich den Historiendaten plausibel ist.

7. Verfahren nach einem der vorherigen Ansprüche, wobei die Feldgeräte (FG1, ..., FG5) im Zuge des Etablierens des Ersetzungssystems (ES) ermitteln, ob Sensoreinheiten (SE1, ..., SE5') zueinander redundante Prozessgrößen erheben.

8. Verfahren nach Anspruch 7, wobei bei einem vorbestimmten Gerätestatus von einem der Feldgeräte (FG1, ..., FG5), bzw. vom einem der Sensorsysteme, welches eine redundante Prozessgröße erhebt, keine Ersatzgröße an die übergeordnete Einheit (GW, SPS) übermittelt wird.

9. Verfahren nach einem der vorherigen Ansprüche, wobei als erstes Kommunikationsnetzwerk (KN1) ein drahtgebundenes, insbesondere ein Ethernet-basiertes, Kommunikationsnetzwerk verwendet wird.

10. Verfahren nach einem der Ansprüche 1 bis 8, wobei als erstes Kommunikationsnetzwerk (KN1) ein drahtloses Kommunikationsnetzwerk verwendet wird.

11. Verfahren nach einem der vorherigen Ansprüche, wobei die Feldgeräte (FG1, ..., FG5) untereinander und mit der übergeordneten Einheit (GW, SPS) über das erste Kommunikationsnetzwerk (KN1) kommunizieren.

12. Verfahren nach einem der Ansprüche 1 bis 10, wobei die Feldgeräte (FG1, ..., FG5) mit der übergeordneten Einheit (GW, SPS) über das erste Kommunikationsnetzwerk (KN1) kommunizieren und wobei die Feldgeräte (FG1, ..., FG5) untereinander über ein zweites Kommunikationsnetzwerk (KN2), insbesondere über ein drahtloses Kommunikationsnetzwerk, kommunizieren.

## Claims

1. Procedure to compensate for a malfunction of a field device (FG1, FG2, FG3, FG4, FG5) in a system (A) used in automation engineering, wherein multiple field devices (FG1, ..., FG5) are provided in the system, wherein each of the field devices (FG1, ..., FG5) has at least one sensor unit (SE1, SE2, SE3, SE3', SE4, SE5, SE5'), wherein said unit is designed to acquire at least one process variable, wherein the field devices (FG1, ..., FG5) are integrated in a first communication network (KN1) and communicate with a higher-level unit (GW, SPS) and with one another, and wherein the field devices (FG1, ..., FG5) transmit the acquired process values, the diagnostic data and the status information to the higher-level unit (GW, SPS) via the communication network (KN1), wherein said procedure comprises the following steps:
- Transmission of properties of the sensor unit (SE1, ..., SE5') of a field device (FG1, ..., FG5) to each of the other field devices (FG1, ..., FG5), wherein the properties contain information about the type of process variables that can be acquired by the sensor unit (SE1, ..., SE5');
- Transmission of the device status of the field devices (FG1, ..., FG5) and/or of the sensor units (SE1, ..., SE5') to each of the other field devices (FG1, ..., FG5), particularly permanently or at specified times;
- Establishment of a replacement system (ES), wherein each of the field devices (FG1, ..., FG5) knows the properties of each of the sensor units (SE1, ..., SE5') and the device status of each of the field devices (FG1, ..., FG5) and/or of each of the sensor units (SE1, ..., SE5'), and wherein, while the replacement system (ES) is being established, the field devices (FG1, ..., FG5) independently determine which process variable of a sensor unit (SE1, ..., SE5') can replace a process variable of another sensor unit (SE1, ..., SE5'), with a predefined accuracy, as a replacement variable; and
- Transmission of the replacement variable to the higher-level unit (GW, SPS) if at least one predefined device status of a field device (FG1, ..., FG5) or of a sensor unit (SE1, ..., SE5') occurs.

2. Procedure as claimed in Claim 1, wherein, during the establishment of the replacement system (ES), other properties of a field device (FG1, ..., FG5), or of a sensor system of the field device (FG1, ..., FG5) are transmitted to the multiple field devices (FG1, ..., FG5) and compared.

3. Procedure as claimed in Claim 2, wherein the other properties contain information concerning the geographical position of the field device (FG1, ..., FG5).

4. Procedure as claimed in Claim 2 or 3, wherein the other properties contain information concerning the measuring point (MS1, MS2) in which the field device (FG1, ..., FG5) is mounted, and/or concerning the function of the field device (FG1, ..., FG5) in the measuring point (MS1, MS2).

5. Procedure as claimed in one of the previous claims, wherein the replacement variable is only transmitted to the higher-level unit (GW, SPS) if the replacement variable is confirmed by a predefined number of field devices (FG1, ..., FG5).

6. Procedure as claimed in one of the previous claims, wherein the history of the replacement variable is compared to the history data of the determined process variable of the field device (FG1, ..., FG5) where the at least one predefined device status has occurred and is only confirmed if the values of the replacement variable are plausible in relation to the history data.

7. Procedure as claimed in one of the previous claims, wherein, when the replacement system (ES) is being established, the field devices (FG1, ..., FG5) determine whether sensor units (SE1, ..., SE5') acquire process variables that are redundant in relation to one another.

8. Procedure as claimed in Claim 7, wherein, in a predefined device status, no replacement variable is transmitted to the higher-level unit (GW, SPS) by one of the field devices (FG1, ..., FG5) or one of the sensor systems that acquire a redundant process variable.

9. Procedure as claimed in one of the previous claims, wherein a wired communication network, particularly an Ethernet-based communication network, is used as the first communication network (KN1).

10. Procedure as claimed in one of the Claims 1 to 8, wherein a wireless communication network is used as the first communication network (KN1).

11. Procedure as claimed in one of the previous claims, wherein the field devices (FG1, ..., FG5) communicate with one another and with the higher-level unit (GW, SPS) via the first communication network (KN1).

12. Procedure as claimed in one of the Claims 1 to 10, wherein the field devices (FG1, ..., FG5) communicate with the higher-level unit (GW, SPS) via the first communication network (KN1) and wherein the field devices (FG1, ..., FG5) communicate with one another via a second communication network (KN2), particularly via a wireless communication network.

## Revendications

1. Procédé destiné à la compensation d'un dysfonctionnement d'un appareil de terrain (FG1, FG2, FG3, FG4, FG5) dans une installation (A) de la technique d'automatisation, une pluralité d'appareils de terrain (FG1, ..., FG5) étant prévus dans l'installation, chacun des appareils de terrain (FG1, ..., FG5) comportant au moins une unité de capteur (SE1, SE2, SE3, SE3', SE4, SE5, SE5'), laquelle unité est conçue pour l'acquisition d'au moins une grandeur de process, les appareils de terrain (FG1, ..., FG5) étant intégrés dans un premier réseau de communication (KN1) et communiquant avec une unité supérieure (GW, SPS) ainsi qu'entre eux, et les appareils de terrain (FG1, ..., FG5) transmettant les valeurs de process acquises, les données de diagnostic et les informations d'état à l'unité supérieure (GW, SPS) par le biais du réseau de communication (KN1), lequel procédé comprend les étapes suivantes :
- Transmission de propriétés de l'unité de capteur (SE1, ..., SE5') d'un appareil de terrain (FG1, ..., FG5) à chacun des autres appareils de terrain (FG1, ..., FG5), les propriétés contenant des informations sur le type de grandeurs de process pouvant être acquises par l'unité de capteur (SE1, ..., SE5') ;
- Transmission de l'état des appareils de terrain (FG1, ..., FG5) et/ou des unités de capteur (SE1, ..., SE5') à chacun des autres appareils de terrain (FG1, ..., FG5), notamment en permanence ou à des moments définis ;
- Établissement d'un système de remplacement (ES), chacun des appareils de terrain (FG1, ..., FG5) connaissant les propriétés de chacune des unités de capteur (SE1, ..., SE5') et l'état de chacun des appareils de terrain (FG1, ..., FG5) et/ou de chacune des unités de capteur (SE1, ..., SE5'), et les appareils de terrain (FG1, ..., FG5) déterminant de manière autonome, lors de l'établissement du système de remplacement (ES), quelle grandeur de process d'une unité de capteur (SE1, ..., SE5') peut remplacer une grandeur de process d'une autre unité de capteur (SE1, ..., SE5') avec une précision prédéfinie en tant que grandeur de remplacement ; et
- Transmission de la grandeur de remplacement à l'unité supérieure (GW, SPS) dans le cas de l'apparition d'au moins un état d'appareil prédéfini d'un appareil de terrain (FG1, ..., FG5) ou d'une unité de capteur (SE1, ..., SE5').

2. Procédé selon la revendication 1, pour lequel, au cours de l'établissement du système de remplacement (ES), d'autres propriétés d'un appareil de terrain (FG1, ..., FG5), ou d'un système de capteurs de l'appareil de terrain (FG1, ..., FG5), sont transmises à la pluralité d'appareils de terrain (FG1, ..., FG5) et comparées.

3. Procédé selon la revendication 2, pour lequel les autres propriétés comprennent des informations concernant la position géographique de l'appareil de terrain (FG1, ..., FG5).

4. Procédé selon la revendication 2 ou 3, pour lequel les autres propriétés comprennent des informations concernant le point de mesure (MS1, MS2) dans lequel l'appareil de terrain (FG1, ..., FG5) est monté, et/ou concernant la fonction de l'appareil de terrain (FG1, ..., FG5) dans le point de mesure (MS1, MS2).

5. Procédé selon l'une des revendications précédentes, pour lequel la grandeur de remplacement n'est transmise à l'unité supérieure (GW, SPS) que si la grandeur de remplacement est confirmée par un nombre prédéfini d'appareils de terrain (FG1, ..., FG5).

6. Procédé selon l'une des revendications précédentes, pour lequel l'historique de la grandeur de remplacement est comparé à des données historiques de la grandeur de process déterminée de l'appareil de terrain (FG1, ..., FG5), sur lequel l'au moins un état d'appareil prédéterminé s'est produit, et n'est confirmé que si les valeurs de la grandeur de remplacement sont plausibles par rapport aux données historiques.

7. Procédé selon l'une des revendications précédentes, pour lequel les appareils de terrain (FG1, ..., FG5) déterminent, à l'occasion de l'établissement du système de remplacement (ES), si des unités de capteurs (SE1, ..., SE5') acquièrent des grandeurs de process redondantes entre elles.

8. Procédé selon la revendication 7, pour lequel, dans le cas d'un état d'appareil prédéterminé, aucune grandeur de remplacement n'est transmise à l'unité supérieure (GW, SPS) par l'un des appareils de terrain (FG1, ..., FG5) ou par l'un des systèmes de capteurs qui acquiert une grandeur de process redondante.

9. Procédé selon l'une des revendications précédentes, pour lequel on utilise comme premier réseau de communication (KN1) un réseau de communication filaire, notamment un réseau de communication basé sur Ethernet.

10. Procédé selon l'une des revendications 1 à 8, pour lequel on utilise comme premier réseau de communication (KN1) un réseau de communication sans fil.

11. Procédé selon l'une des revendications précédentes, pour lequel les appareils de terrain (FG1, ..., FG5) communiquent entre eux et avec l'unité supérieure (GW, SPS) par l'intermédiaire du premier réseau de communication (KN1).

12. Procédé selon l'une des revendications 1 à 10, pour lequel les appareils de terrain (FG1, ..., FG5) communiquent avec l'unité supérieure (GW, SPS) par l'intermédiaire du premier réseau de communication (KN1) et pour lequel les appareils de terrain (FG1, ..., FG5) communiquent entre eux par l'intermédiaire d'un deuxième réseau de communication (KN2), notamment par l'intermédiaire d'un réseau de communication sans fil.
